# EUROPÄISCHE PATENTSCHRIFT

(11) **EP 1 160 463 B1**
(45) Veröffentlichungstag und Bekanntmachung des Hinweises auf die Patenterteilung: **14.05.2008**
(21) Anmeldenummer: 01105531.6
(22) Anmeldetag: 06.03.2001
(51) Int. Cl.: F16B 9/00, F16L 41/08, E03C 1/22, A61H 33/00

(54) **Sanitärwanne**
Sanitary tub
Baignoire sanitaire

(30) Priorität: 23.05.2000 DE 10025020
(43) Veröffentlichungstag der Anmeldung: 05.12.2001
(73) Patentinhaber: VILLEROY & BOCH AG, 66693 Mettlach (DE)
(72) Erfinder: Blaauwwiekel, Harm, 9301 DB Roden (NL); van der Vorst, Wouter, 9356 VE Tolbert (NL)
(74) Vertreter: KEIL & SCHAAFHAUSEN Patentanwälte

(56) Entgegenhaltungen:
- CH-A- 627 253
- DE-C- 834 164
- GB-A- 436 294
- US-A- 3 879 065
- US-A- 4 161 043
- US-A- 4 419 026

## Beschreibung

Die Erfindung betrifft eine Sanitärwanne mit mindestens einer in einem Montageloch ihrer Wandung aufgenommenen Funktionseinheit gemäß dem Oberbegriff des Patentanspruchs.

Es ist bekannt, in die Wandung eine Sanitärwanne, also deren Seitenwand oder Boden, Funktionseinheiten wie Wasserdüsen, Luftdüsen, Ablauf- und Überlaufgarnituren oder Beleuchtungsarmaturen einzubauen.

Die US-A-4 161 043 offenbart eine Sanitärwanne mit mindestens einer in einem Montageloch ihrer Wandung flächenbündig zu der Innenfläche der Wandung aufgenommenen Funktionseinheit, wobei das Montageloch aufgrund der Matererialbeschaffenheit der Wandung als Buchse fungiert und mit einer flanschfreien Buchse als gesondertem Bauteil ausgestattet ist und wobei die Funktionseinheit in dem Montageloch bzw. der Buchse durch radial wirkende Kräfte verklemmt ist. Hierzu sind besondere Keilelemente erforderlich.

Die GB-A-436 294 zeigt eine Sanitärwanne mit einer Funktionseinheit flächenbündig zu der Innenfläche der Wandung. Die Funktionseinheit ist in dem Montageloch durch radial wirkende Kräfte verklemmt und mittels einer Dichtmasse festgelegt. Zur Erzeugung der radial wirkenden Kräfte sind besondere Schrauben erforderlich, welche von außen in den Sitz der Funktionseinheit einzubringen sind.

Die US-A-4 951 326 offenbart eine Sanitärwanne mit einer zu der Innenfläche der Wandung flächenbündigen in ein Montageloch eingeformten Funktionseinheit. Die Flächenbündigkeit wird dadurch erzielt, dass die Wand aus Beton, in welche die Funktionseinheit eingeformt worden ist, nachträglich mit einer Kunststoffschicht der erforderlichen Dicke belegt wird.

Bei einer Sanitärwanne nach der EP-A-0 619 110 ist bspw. eine Luftaustrittsdüse für eine Luftsprudeleinrichtung in einem Montageloch des Wannenbodens vorgesehen, wobei eine Düsenkappe mit einem Gewindeabschnitt den Wannenboden durchragt und mit einem Umfangsflansch auf der Innenfläche des Wannenbodens aufliegt. Die Düsenkappe wird mit einer Gegenmutter an dem Wannenboden axial festgespannt. Dieser nicht flächenbündige Einbau beeinträchtigt den Badekomfort, das Aussehen, die Sicherheit, weil man sich an dem vorspringenden Kappenteil stoßen kann, sowie die Hygiene, weil sich in den vorhandenen Fugen unter dem Umfangsflansch Schmutz ablagern kann und das Reinigen der Innenfläche des Wannenkörpers. Das Vorhandensein des Flansches bringt ferner den Nachteil mit sich, dass die Düsenkappe bspw. im Übergangsbereich zwischen Wannenboden und Wannenwand bzw. in der Nähe von starken sonstigen Krümmungen der Wandung nicht montiert werden kann.

Aus der DE-C-3 707 937 ist es an sich bekannt, eine Düse in einer Bohrung in einer Einwölbung des Wandmaterials vorzusehen, so dass die Düse mit ihrem Deckel weniger weit in das Wanneninnere vorspringt. Derartige Einwölbungen sind jedoch unerwünscht, weil schwierig sauber zu halten und weil die diesbezüglichen Herstellungsformen für den Kunststoffguss aufwendig und teuer sind.

Aus der DE-U-8 810 041 ist eine Einlaufdüse für ein Wasserbecken bekannt, welche eine quadratische ebene Platte aufweist, welche zusammen mit einem zylindrischen Körper ein Düsengehäuse bildet. Damit die Einlaufdüse in der Beckenwand bzw. dem Beckenboden keine Vorsprünge bildet, fügt sich die Einlaufdüse mit der ebenen Platte in die Beckenwandung ein. Hierzu ist nicht nur eine Montageöffnung, sondern auch eine Vertiefung für die Aufnahme der quadratischen ebenen Platte erforderlich, was den Fertigungsaufwand erhöht. Außerdem ergeben sich hierbei zwischen der ebenen Platte und der sie umgebenden Beckenwandung unerwünschte Fugen, in welchen sich Schmutz ablagern kann und welche gesondert abgedichtet werden müssen.

Aus der EP-A-0 616 798 ist eine Düse für eine Sanitärwanne bekannt, bei welcher der Düsenkörper einen Flansch aufweist, welcher in eine Vertiefung oder Ansenkung im Bereich der Innenfläche der Wanne angeodnet ist, wobei die Oberfläche des Düsenkörpers im Wesentlichen bündig oder in der gleichen Ebene angeordnet ist wie die Innenfläche der Wanne. Der Düsenkörper wird mit Hilfe einer Gegenmutter unter Ausnutzung des auf diese Weise unentbehrlichen Flansches axial an der Wannenwandung festgespannt, welche auf einen mit Außengewinde versehenen und die Montageöffnung mit Spiel durchdringenden Gehäuseabschnitt aufschraubbar ist. Hierbei ist außer der Montageöffnung nicht nur eine gesonderte Vertiefung oder Ansenkung im Bereich der Montageöffnung erforderlich, sondern es sind auch noch gesonderte Dichtmaßnahmen zu treffen, bspw. durch Anordnen eines besonderen Dichtringes unterhalb des Gehäuseflansches.

Der Erfindung liegt die Aufgabe zugrunde, eine Sanitärwanne der eingangs genannten Art zu schaffen, bei der auf einfache Weise eine fluiddichte und flächenbündige Montage einer Funktionseinheit möglich ist, wobei zuvor zum Stand der Technik genannten Nachteile vermieden sind.

Diese Aufgabe wird bei einer Sanitärwanne der eingangs genannten Art mit den Merkmalen des kennzeichnenden Teils des Patentanspruchs gelöst. "Als Buchse fungiert" bedeutet in diesem Zusammenhang, dass die Innenfläche des Montageloches aufgrund der Materialbeschaffenheit der Wandung eine ausreichende Abdichtungsoberfläche bietet.

Da die Funktionseinheit ein Gehäuse und einen Klemmring aufweist, wobei Gehäuse und Klemmring mit einer zusammenwirkenden Zahnung und Gegenzahnung ausgestattet sind, kann durch bloßes Verdrehen des Klemmringes gegenüber dem Gehäuse ein Aufweiten des Klemmringes und damit Verklemmen des Gehäuses in dem Montageloch bzw. der Buchse erfolgen.

Bei einer solchen Sanitärwanne befinden sich auf der Benutzerseite, also der Innenfläche der Sanitärwanne, keine herausragenden Teile wie Flansche oder dgl.. Aufgrund der Art der Festlegung der Funktionseinheit in dem Montageloch bzw. der darin vorgesehenen gesonderten Buchse wird eine zuverlässige fluiddichte Montage nicht nur bei homogenen Wannenmaterial und sehr geringer Wandstärke ermöglicht, sondern auch bei aus mehreren Schichten zusammengesetzten Wandungen, indem dort eine gesonderte Buchse z.B. aus einem homogenen Kunststoffmaterial fest eingekittet oder eingeformt wird, dessen Innenfläche geeignet ist, um die Funktionseinheit fest und zuverlässig fluiddicht anzubringen.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: einen Teilschnitt einer erfindungsgemäßen Sanitärwanne mit einer Funktionseinheit,
- Fig. 2: eine Schrägansicht einer erfindungsgemäßen Funktionseinheit mit einem Gehäuse und einem Klemmring in auseinandergezogener Darstellung, und
- Fig. 3: eine Ansicht entsprechend Fig. 2, nachdem Gehäuse und Klemmring zusammengesetzt worden sind,

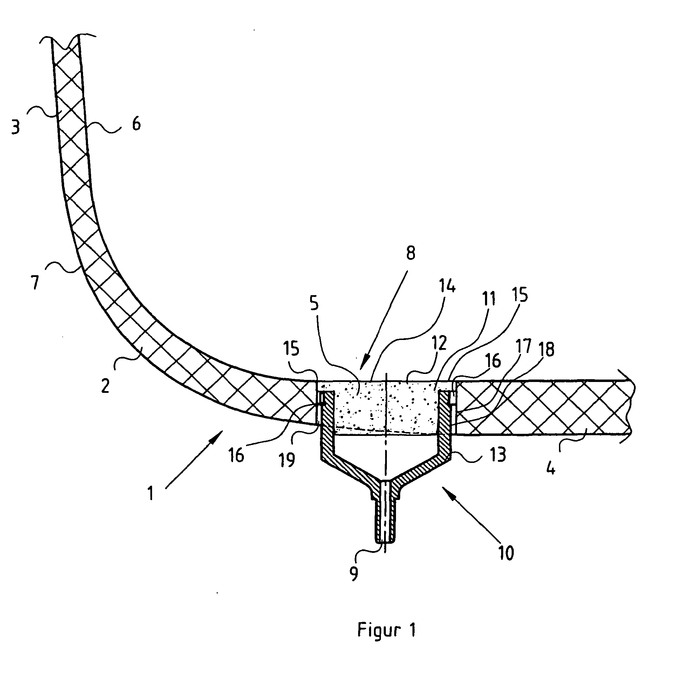

Die in Fig. 1 dargestellte Sanitärwanne 1 umfasst eine Wandung 2 mit einer Wannenwand 3 und einem Wannenboden 4. Die Wandung 2 ist in diesem Fall aus einem homogenen Material hergestellt, wie bspw. einem ausgehärteten mineralgefüllten Acrylat, welches unter der Handelsmarke "Quaryl" vertrieben wird. In dem Wannenboden 4 befindet sich ein Montageloch 5, welches sich von einer Innenfläche 6 zu einer Außenfläche 7 in der Wandung 2 der Sanitärwanne 1 erstreckt. Das Montageloch 5 ist zylindrisch.

Wie in Fig. 1 desweiteren zu erkennen ist, befindet sich in dem Montageloch 5 eine Funktionseinheit 8 fluiddicht eingesetzt. Die Funktionseinheit 8 ist in diesem Fall eine Luftaustrittsdüse 10 mit einem Lufteintritt 9 und einem Luftaustritt 11. In den Luftaustritt 11 ist ein Körper aus mikroporösem Material 12 eingesetzt, welcher mit einem Umfangsflansch die gegenüber der Innenfläche 6 zurückgesetzte Stirnseite eines Gehäuses 13 der Funktionseinheit überkragt. Die Oberfläche 14 des mikroporösen Materials 12 ist jedenfalls an ihrem Umfangsrand 15 flächenbündig mit der Innenfläche 6 des Bodens 4, während sie zur Mitte hin leicht konvex ansteigen kann, damit das Wasser beim Entleeren der Sanitärwanne 1 leichter abfließen kann. Dies wird deswegen ebenfalls als "flächenbündig" angesehen, weil aus der Innenfläche 6 der Wandung 2 keine störenden Teile vorstehen.

Zur Befestigung der Funktionseinheit 8 in dem Montageloch 5 der Wandung 2 ist ein als Klemmring 16 ausgebildetes Klemmelement am Umfang des Gehäuses 13 der Düse 10 vorgesehen.Zusätzlich zu dem Klemmring 16 kann in dem zwischen Innenfläche 17 des Montageloches 5 und Außenfläche 18 des Gehäuses 13 vorhandenen Spalt 19 eine (nicht dargestellte) Dichtmasse oder ein Klebstoff vorgesehen sein, welche bzw. welcher die Fluiddichtigkeit weiter verbessert.

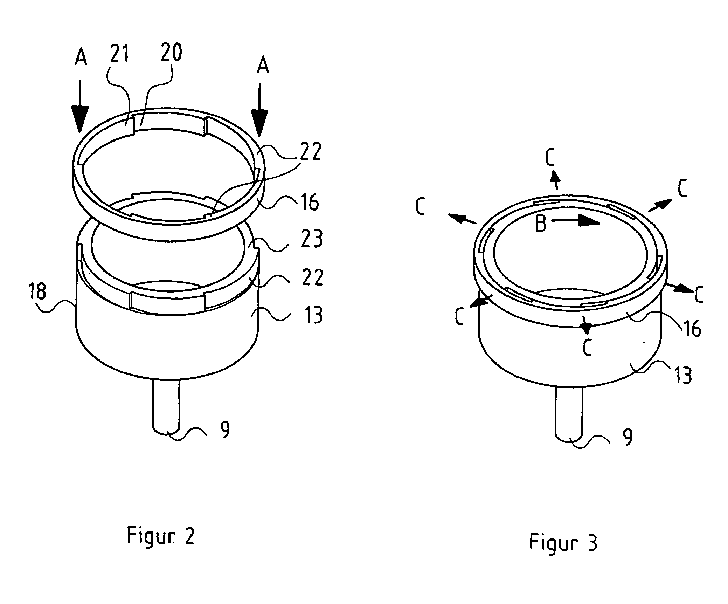

Fig. 2 zeigt in einer Schrägansicht das Düsengehäuse 13 mit dem Klemmring 16 in einer auseinandergezogenen Darstellung. Der Klemmring 16 weist auf seiner Innenseite 20 eine Zahnung 21 mit mehreren leicht ansteigenden Zahnflanken 22 auf. Das Gehäuse 13 hat auf der Außenseite seines Austrittsendes, d.h. an seinem dem Lufteintritt gegenüberliegenden Ende entlang seines Außenumfangs eine zu der Zahnung 21 des Klemmrings 16 korrespondierende Gegenzahnung 23.

Zum Festlegen des Gehäuses 13 in dem Montageloch 5 werden beide Teile entsprechend den Pfeilen A von Fig. 3 in dem Montageloch 5 zusammengeführt, so dass Zahnung 21 und Gegenzahnung 23 zunächst lose ineinandergreifen. Gemäß Fig. 3 wird dann der Klemmring 16 gegenüber dem Gehäuse 13 entsprechend dem Pfeil B verdreht, so dass die einander korrespondierenden Zahnflanken 23 von Klemmring 16 und Gehäuse 13 zusammenwirken. Aufgrund der vorhandenen Auflaufschrägen und der Verformbarkeit des Klemmrings 16 weitet sich der Klemmring 16 auf und setzt sich fluiddicht in dem Montageloch 5 fest. Das Verdrehen des Klemmringes 16 gegenüber dem Gehäuse 13 erfolgt zweckmäßigerweise mittels eines Eingriffswerkzeuges, wofür entsprechende Eingriffsöffnungen vorgesehen sein können.

### Bezugszeichenliste:

- 1: Sanitärwanne
- 2: Wandung
- 3: Wannenwand
- 4: Wannenboden
- 5: Montageloch
- 6: Innenfläche
- 7: Außenfläche
- 8: Funktionseinheit, wie Luftdüse
- 9: Lufteintritt
- 10: Düse
- 11: Luftaustritt
- 12: mikroporöses Material
- 13: Gehäuse
- 14: Oberfläche
- 15: Rand
- 16: Klemmring
- 17: Innenfläche
- 18: Außenfläche
- 19: Spalt
- 20: Innenseite
- 21: Zahnung
- 22: Zahnflanken
- 23: Gegenverzahnung
- 27: Buchse

## Patentansprüche

1. Sanitärwanne mit mindestens einer in einem Montageloch (5) ihrer Wandung (2) flächenbündig zu der Innenfläche (6) der Wandung (2) aufgenommenen Funktionseinheit (8), wobei das Montageloch (5) aufgrund der Materialbeschaffenheit der Wandung (2) als Buchse fungiert und/oder mit einer flanschfreien Buchse (27) als gesondertem Bauteil ausgestattet ist und wobei die Funktionseinheit (8) in dem Montageloch (5) bzw. der Buchse (27) durch radial wirkende Kräfte verklemmt ist, **dadurch gekennzeichnet, dass** die Funktionseinheit (8) ein Gehäuse (13) und einen Klemmring (16) aufweist, wobei Gehäuse (13) und Klemmring (16) eine zusammenwirkende Zahnung (21) und Gegenzahnung (23) derart aufweisen, dass bei Verdrehen des Klemmringes (16) gegenüber dem Gehäuse (13) ein Aufweiten des Klemmringes (16) und damit Verklemmen des Gehäuses (13) in dem Montageloch (5) bzw. der Buchse (27) erfolgt.

## Claims

1. A sanitary tub having at least one functional unit (8) accommodated in a mounting hole (5) in its wall (2) so as to lie flush with the inner face (6) of said wall (2), the mounting hole (5) acting as a sleeve owing to the material composition of the wall (2) and/or being fitted with a flange-free sleeve (27) as a separate component, and the functional unit (8) being secured in said mounting hole (5) or sleeve (27) by forces acting in radial direction, **characterized in that** the functional unit (8) has a housing (13) and a clamping ring (16), said housing (13) and clamping ring (16) having a cooperating toothing (21) and mating toothing (23) such that, when the clamping ring (16) is twisted relative to the housing (13), expansion of the clamping ring (16) occurs, resulting in the housing (13) becoming wedged in the mounting hole (5) or sleeve (27).

## Revendications

1. Bac sanitaire ayant au moins une unité fonctionnelle (8) reçue dans un trou de montage (5) de sa paroi (2) en étant à fleur de la paroi (2), le trou de montage (5), en raison des propriétés des matériaux de la paroi (2), servant de douille et/ou étant muni d'une douille (27) sans collerette en tant qu'élément de construction séparé, et l'unité fonctionnelle (8) étant coincée dans le trou de montage (5) ou dans la douille (27) par des forces agissant radialement, **caractérisé en ce que** l'unité fonctionnelle (8) est munie d'un boîtier (13) et d'un anneau de serrage (16), le boîtier (13) et l'anneau de serrage (16) présentant une denture (21) et une contre-denture (23) coopérant ensemble de telle sorte qu'en cas de pivotement de l'anneau de serrage (16) par rapport au boîtier (13) il se produise un élargissement de l'anneau de serrage (16) et ainsi un coinçage du boîtier (13) dans le trou de montage (5) ou dans la douille (27).
